(19)

Europäisches
Patentamt
European
Patent Office
Office européen
des brevets

(11) **EP 1 892 841 A1**

(12) **EUROPEAN PATENT APPLICATION**

(43) Date of publication:
**27.02.2008 Bulletin 2008/09**

(51) Int Cl.:
**H04B 1/69** *(2006.01)*    *H04B 1/707* *(2006.01)*

(21) Application number: **06017620.3**

(22) Date of filing: **24.08.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicants:
• **Mitsubishi Electric Information Technology
Centre
Europe B.V.
1119 NS  Schiphol Rijk (NL)**
Designated Contracting States:
**FR**
• **MITSUBISHI DENKI KABUSHIKI KAISHA
Chiyoda-ku, Tokyo 100-8310 (JP)**
Designated Contracting States:
**AT BE BG CH CY CZ DE DK EE ES FI GB GR HU
IE IS IT LI LT LU LV MC NL PL PT RO SE SI SK TR**

(72) Inventors:
• **Paquelet, Stéphane**
CS 10806
**35708 Rennes Cedex 7 (FR)**
• **Froc, Gwillerm**
CS 10806
**35708 Rennes Cedex 7 (FR)**

(74) Representative: **Maillet, Alain
Cabinet le Guen Maillet
5, Place Newquay
B.P. 70250
35802 Dinard Cedex (FR)**

(54) **Synchronisation in an impulse-based telecommunication system**

(57)    The present invention relates to a method for transmitting a signal carrying data from a transmitter to a receiver in an impulse-based telecommunication system, in which the carrying data are obtained by the receiver when a sequence of impulses representative of a time reference pattern has been detected. Such method includes

- a signal generation step (100) in the course of which a sequence of impulses representative of a signal characterisation pattern (SCP) known by the receiver beforehand is periodically inserted in the signal to transmit, a sequence of impulses indicating that each frame of the signal to transmit carries a sequence of impulses representative of a time reference pattern (TTP), and a single sequence of impulses representative of said time reference pattern (TTP) is inserted in each frame of the signal to transmit, and

- a signal characterisation detection step (200) intended to detect from an observed part of the received signal the presence of one of sequences of impulses representative of the signal characterisation pattern (SCP) embedded in a received signal frame, and,

- when a sequence of impulses representative of the signal characterisation pattern (SCP) has been detected, a time reference detection step (300) intended to detect the presence of the sequence of impulses representative of the time reference pattern (TTP) carried by said signal frame.

Fig. 5

**Description**

The present invention relates to a method for transmitting a signal carrying data from a transmitter to a receiver in an impulse-based telecommunication system. It relates also, according to one of its hardware oriented aspect, to a telecommunication system, a device intended to transmit such a signal, and a device intended to receive such a signal. Finally, it relates to a signal transmitted between a transmitter and a receiver in such a telecommunication system.

In an impulse-based telecommunication system, exchanged signals are formed by a succession of impulses modulated either by data, signalling or controlling information to transmit between a transmitter and a receiver. The succession of impulses are transmitted per frame defined according to a temporal law.A signal frame comprises usually a trailer and a payload which both include sets of impulses. The payload includes sets of impulses which carry data to transmit and the trailer includes sets of impulses which carry some information used for synchronising in time each frame of the signal present at the receiver end.

Data included in a signal frame present at the receiver end cannot be obtained directly by the receiver because the receiver is not synchronised in time with the transmitter. In other words, the receiver is not aware of the beginning of the signal frame and consequently of the beginning of sets of impulses which carry transmitted data, i.e. the beginning of the payload. To solve this synchronisation problem, it is usual to include in the trailer a set of impulses generated from a pattern, named in the following the time reference pattern. Note that this set of impulses is thus carried periodically by the transmitted signal. The value of the period is the frame duration.

A pattern is a set of pair of amplitude/position values. Each pair of amplitude/position values defines the maximal amplitude of an impulse of a sequence of impulses generated from the pattern and the other value of the same pair defines the temporal position of said impulse.

When a sequence of impulses generated from a time reference pattern has been detected, i.e. when the receiver is synchronised in time with a transmitter, the receiver is able to determine precisely the beginning of the payload from the knowledge of the structure of the signal frame, and then is able to obtain the transmitted data.

In an impulse-based telecommunication system, the time duration of an impulse is very short. For example, in the so-called Ultra-Wide Band telecommunication systems (further referred to as UWB systems) the time duration of an impulse is lower than 0,1 nanosecond, which offers to such systems bandwidths at least as large as 10 GigaHertz, entailing high flexibility and hence numerous possible applications for such systems.

However, due to the shortness of impulses involved in such impulse-based telecommunication systems, detecting a single sequence of impulses generated from a time reference pattern is difficult to perform at the receiver end because the receiver is not aware if the received signal carries such a sequence and because it is not aware of the beginning time of a frame of said signal.

An obvious solution is to repeat a same sequence of impulses generated from the time reference pattern in the trailer of each signal frame. At the receiver end, an iterative detection process is then executed in order to detect one of these sequences. Repeating a same sequence of impulses generated from a time reference pattern in the trailer increases significantly the detection probability of this sequence at the receiver end. However, when one of these repeated sequences is detected, an ambiguity on the time reference occurs because the receiver is not aware if the detected sequence is the first one, the last one or any other intermediate sequences included in the trailer. Thus, the repetition of a same sequence of impulses generated from a time reference pattern is not a solution to the synchronisation problem because it involves an ambiguity on the time reference at the receiver end.

So, the present invention aims at providing a method for transmitting a signal carrying data from a transmitter to a receiver in an impulse-based telecommunication system as above-described, characterised in that it includes a signal generation step intended to be executed by the transmitter in the course of which

-   a sequence of impulses representative of a signal characterisation pattern known by the receiver beforehand is periodically inserted in the signal to transmit, said sequence of impulses indicating that each frame of the signal to transmit carries a sequence of impulses representative of a time reference pattern, and
-   a single sequence of impulses representative of said time reference pattern is inserted in each frame of the signal to transmit.

The value of the period at which a sequence of impulses representative of the signal characterisation pattern is inserted in the signal is either equal to the total duration of the signal frame, when a single sequence of impulses representative of the signal characterisation pattern is included in each signal frame, or to the duration of a sequence of impulses representative of the signal characterisation pattern, when multiple sequences of impulses representative of such a pattern are included in a same signal frame. Thus, according to the present invention, by defining a time reference pattern which allows the receiver to distinguish a sequence representative of the time reference pattern from a sequence of impulses representative of the signal characterisation pattern, i.e. a sequence of impulses which breaks the periodicity of sequences which are representative of the signal characterisation pattern, the receiver is able to obtain the time reference without any ambiguity.

A sequence of impulses generated from a pattern is said representative of this pattern because the set of pairs of amplitude/position values related to the impulses of said sequence may be either identical to the set of pairs of amplitude/position values of the pattern, the sequence of impulses is then said identical to the pattern, or slightly different of the set of pairs of amplitude/position values of the pattern, the sequence of impulses is then said slightly different to the pattern.

The slightly differences, also named variations in the following, which may occur on the set of pairs of amplitude/position values which define a sequence of impulses representative of a pattern may be generated by a transmitter or may result of the transmission of said sequence over the channel established between a transmitter and a receiver. Such variations, independently of their origins, introduce an incertitude on the set of pairs of amplitude/position values of a received sequence. The pattern features include then a set of pairs of amplitude/position values and at least one probability law related to this set of pairs of amplitude/position values. Each probability law defines a type of variation which may occur on the set of pairs of amplitude/position values. Multiple probability laws may be related to the set of pairs of values. For example, one of them may be related to the amplitude of impulses of a sequence, and another one to the position of impulses of such a sequence or both.

When a signal is transmitted from air-interfaces, some perturbations occur on this signal such as for example an amplitude attenuation or a propagation delay. Such perturbations slightly modify a transmitted sequence of impulses generated from a pattern. Thus, a receiver adapted to detect a sequence of impulses representative of a pattern, i.e. a receiver which is aware of the pattern features, is able to detect a sequence of impulses which is identical to the pattern when transmitted by a transmitter and which has been slightly modified by a transmission channel. Thus, the transmitting method according to the present invention is advantageous because it is robust against transmission channel perturbations in the limit of the probability laws of the pattern describe such channel perturbations. This is also advantageous because this involves cheaper material compared to material usually required by a receiver for detecting a sequence of impulses which is identical to the pattern.

According to the present invention, the transmitting method also includes a signal characterisation detection step intended to detect from an observed part of the received signal the presence of one of sequences of impulses representative of the signal characterisation pattern embedded in a received signal frame, and, when a sequence of impulses representative of the signal characterisation pattern has been detected, a time reference detection step intended to detect the presence of the sequence of impulses representative of the time reference pattern carried by said signal frame.

According to an embodiment of the signal characterisation detection step, the presence of a sequence of impulses representative of a signal characterisation pattern is detected by comparing, with a predefined threshold value, an evaluation, from an observed part of the received signal, of a signal function defined according to the signal characterisation pattern features the receiver knows.

The set of pairs of amplitude/position values is a pattern feature which is known by any receiver. Such a pattern feature is completed by one (or multiple) probability law. According to a (or multiple) probability law(s) that a receiver knows, a signal function is defined and used by this receiver for detecting a sequence of impulses and for getting some information carried by such a sequence. Another receiver, which does not know such a probability law, respectively all probability laws or some of them, is then able to get only partially such an information because the signal function is not defined according to such a probability law, respectively all of them. Thus, receivers are classified according to the probability laws they know. Each class of receivers is related to the information the receivers are able to get according to the pattern features they know.

This is advantageous for an operator, for example, which would like to restrict the access to data to some receivers of an impulse-based telecommunication system by sending to them beforehand different features of a same pattern corresponding to different classes of receivers.

According to an example, when the pattern features, known by the receiver, are limited to the set of pairs of amplitude/position values, the signal function may be a correlation function between a received sequence of impulses and a sequence of impulses, generated from the pattern by such a receiver, which is identical to the pattern.

According to another example, when the pattern features are the set of pairs of amplitude/position values and some probability laws related to this set of pairs of values, the signal function may be a function of the energy of a received sequence of impulses.

According to another aspect of the present invention, the signal characterisation detection step intended to detect the presence of a sequence of impulses representative of the signal characterisation pattern is executed each time period T.

Physical phenomena affecting a wireless link established between a transmitter and a receiver will have an impact on the receiver's ability to detect the presence of a sequence of impulses representative of a pattern. A link featuring a strong noise or a long distance will most certainly entail a significant attenuation and/or distortion of the signal transmitted through it, which means that the energy carried by said signal will be more difficult to detect and quantify than that carried by a signal transmitted through a low-noise, short distance channel. The average and the peak emitted power being regulated by the USA's Federal Communications Commission, a solution to this problem is to increase the integration time interval which defines the observed part of the signal according to the distance separating the transmitter and the receiver in order, at the receiver end to reach a large detection probability value of a sequence of impulses representative of a pattern. Thus, a trailer may include a large number of sequences which allows thus the receiver to perform, if necessary, a single evaluation of the signal function over a time integration interval which is defined over multiple parts of the signal observed at the same time. In that way, a sequence of impulse transmitted by a transmitter located at a large distance can be detected. Howcvcr, the waiting time duration between the detection of a sequence of impulses representative of the signal characterisation pattern is reached and the time to detect the sequence of impulses representative of the time reference pattern is a large value even if the detection of the sequence of impulses representative of the signal characterisation pattern is reached from the first of these sequences included in the trailer. Thus, even if the receiver quickly reaches the detection of a sequence of impulses representative of the signal characterisation pattern such a receiver has to wait for a long time duration before considering the sequence of impulses representative of the time reference pattern, thus penalising the access time to data transmitted by a transmitter to a receiver close to it after said receiver has detected a sequence of impulses representative of the signal characterisation pattern.

In order to avoid this problem, the sequences of impulses representative of the signal characterisation pattern are distributed over multiple signal frames according to the present invention. However, it may occur in some cases, details below, that the receiver is not able to ensure that such sequences of impulses be detected. In order to ensure that the receiver detects in a finite number of iterations a sequence of impulses representative of the signal characterisation pattern even if the sequences of impulses are distributed over multiple frames of a transmitted signal, the inventors demonstrate that the total duration of the signal frame and the time period T shall be chosen in order that the value of the ratio between the total duration of the signal frame over the duration of the time chip in which an impulse is embedded and the value of the ratio between the time period T over said time chip duration are two numbers which are prime numbers between them.

This constraint on the duration of the signal frame and the time period T defines a set of total durations of the signal frame for a given duration of a time chip and a given time period T. In a similar manner, it defines also a set of time periods T for a given duration of a time chip and a given total duration of the signal frame.

According to an embodiment of the present invention, the signal characterisation detection step is executed till a predefined condition is satisfied. For example, the predefined condition is satisfied when a sequence of impulses representative of the signal characterisation pattern is detected, or when the cumulative duration of signal characterisation detection steps executed periodically does not exceed a predefined time value, or when an external event coming, for example, from a protocol of the application level. Such a protocol is out of the scope of the present invention.

According to an embodiment of the signal characterisation detection step, the signal characterisation detection step includes

    a) a time-windows definition sub-step in the course of which a set of time windows, which determines a time interval over which the signal is observed, is defined from the features of the signal characterisation pattern,
    b) a pattern-positioning sub-step in the course of which the beginning of the set of time windows is located at a current time instant,
    c) an evaluation sub-step in the course of which the signal function is evaluated,
    d) a comparison sub-step in the course of which said signal function evaluation is compared to the predefined threshold value, and
    e) when the signal function evaluation is lower than the predefined threshold value, a time instant update in the course of which a new current time instant is obtained by adding the time period T to the current time instant, the step b) is then repeated by considering said new current time instant.

The present invention relates also, according to its hardware oriented aspects, to an impulse-based telecommunication system, a device intended to transmit such a signal, and a device intended to receive such signal. Finally, it relates to a signal transmitted between a transmitter and a receiver in such an impulse-based telecommunication system.

The characteristics of the invention mentioned above, as well as others, will emerge more clearly from a reading of the following description given in relation to the accompanying figures, amongst which:

    Fig.1 is a functional diagram depicting an example of a UWB telecommunication system SYST according to the present invention,
    Fig. 2 is a chronogram which depicts a possible shape p(t) which may be chosen for constituting the signal Tsg(t),
    Fig. 3 diagrammatically shows an example of a signal characterisation pattern and some examples of sequences of impulses representative of the signal characterisation pattern,
    Fig. 4 shows a diagram which represents the steps of the transmission method according to the present invention,

Fig. 5 diagrammatically shows two examples of a signal frame according to the present invention,

Fig. 6 represents an embodiment of the transmission method according to an embodiment of the present invention,

Fig. 7 shows an example of a set of windows defined according to a signal characterisation pattern,

Fig. 8 shows chronograms which depict an example of successive iterations of the signal characterisation detection step when a signal is present at the receiver end,

Fig. 9 shows chronograms which depict an example of successive iterations of the signal characterisation detection step from which a sequence of impulses representative of a signal characterisation pattern is detected after a finite number of iterations when a signal is present at the receiver end,

Fig. 10 is a block diagram which represents the signal generation means according to the present invention, and

Fig. 11 is a block diagram which represents the means intended to synchronise in time a receiver with a transmitter according to the present invention.

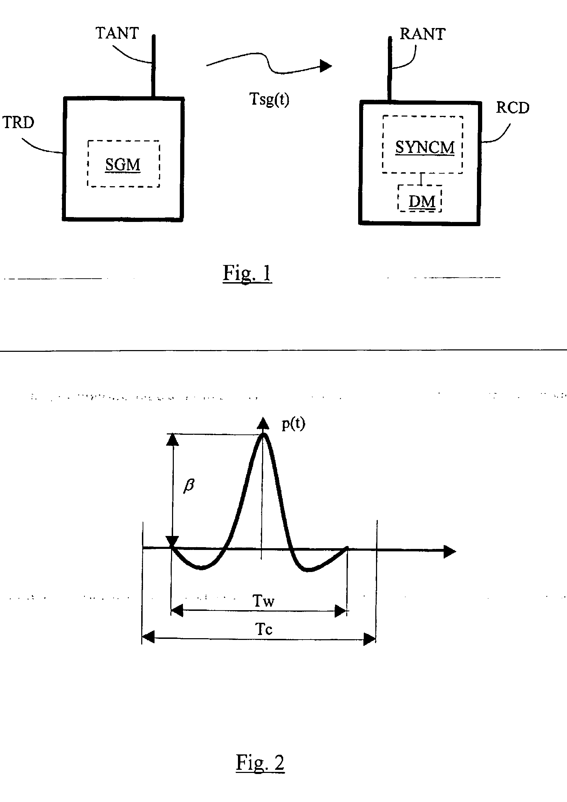

Fig.1 shows a synoptic schema which depicts an example of an impulse-based telecommunication system SYST according to the present invention. The system SYST includes a transmitter TRD and a receiver RCD, which may for example be constituted by devices such as mobile phones. The transmitter TRD includes signal generation means SGM intended to generate a signal Tsg(t) formed by sequences of impulses D(t) which carry data to transmit, by sequences of impulses SC(t) representative each of a signal characterisation pattern SCP known by the receiver RCD beforehand and by sequences of impulses TT(t) representative of a time reference pattern TTP known by the receiver beforehand. The signal Tsg(t) is then transmitted from the transmitter TRD to the receiver RCD thanks to respectively the antenna TANT and RANT and other transmission means not depicted in Fig. 1.

The receiver RCD includes means SYNCM intended to synchronise in time the receiver RCD with the transmitter TRD by detecting first, one of the sequence of impulses SC(t) representative of the signal characterisation pattern SCP and, next by detecting a sequence of impulses TT(t) representative of the time reference pattern TTP. The receiver RCD includes also means DM intended to retrieve transmitted data from the signal Tsg(t) present at the receiver end once the receiver TRD has been synchronised in time with the transmitter TRD. A signal Tsg(t) is said present at the receiver end when said signal is received or has been received previously by the receiver RCD from the antenna RANT.

Fig. 2 is a chronogram which depicts a possible shape p(t) which may be chosen for constituting the signal Tsg(t). Impulses p(t) of the signal Tsg(t) may have different shapes, provided that they all have essentially a same width and carry a same quantity of energy. All impulses p(t) belonging to a same sequence of impulses representative of a pattern may, however, have a same shape such as the shape p(t) depicted here, which is defined over a time chip the duration of which $T_c$ is an integer value, as a derivative of the second order of a Gaussian function, which may be expressed mathematically as $p(t)=\beta.[1-4\pi(t/Tw)^2].exp(-2\pi(t/Tw)^2)$. Other impulse shapes known to those skilled in the art may, of course, be used in this same purpose.

In the following, it is assumed that a single impulse is included in each time chip. Each impulse of the signal Tsg(t) is then related to a pair of amplitude/position values which defines the maximal amplitude $\beta$ of the impulse in a time chip and the time position of the time chip in the signal Tsg(t).

Mathematically speaking, a sequence of impulses representative of a pattern (SCP or TTP) is given by the following equation :

$$M(t) = \sum_{j=1}^{N_s} \beta_j . p(t - m_j . T_c)$$

where the values $\beta_j$ and $m_j$ ($j \in [1,..., N_s]$) related to an impulse p(.) of the sequence M(t) are respectively a real value which represents the amplitude of such an impulse and an integer value which represents the position of such an impulse. Note that the position $m_1$ related to the first impulse of the sequence is chosen arbitrarily and a position $m_j$ ($j \neq 1$) is defined according the position $m_{j-1}$ of the previous impulse.

Moreover, the set of pairs of amplitude/position values ($\beta_j$, $m_j$) $j \in [1,..., N_s]$ may be possibly related to at least one probability law. The set of pairs of amplitude/position values and the possibly related probability law(s) are the features of the pattern SCP and TTP.

The features of the pattern TTP are defined, as mentioned in the opening paragraph, in order that a sequence of impulses TT(t) representative of the pattern TTP breaks the periodicity of sequences of impulses SC(t) representative of the signal characterisation pattern SCP.

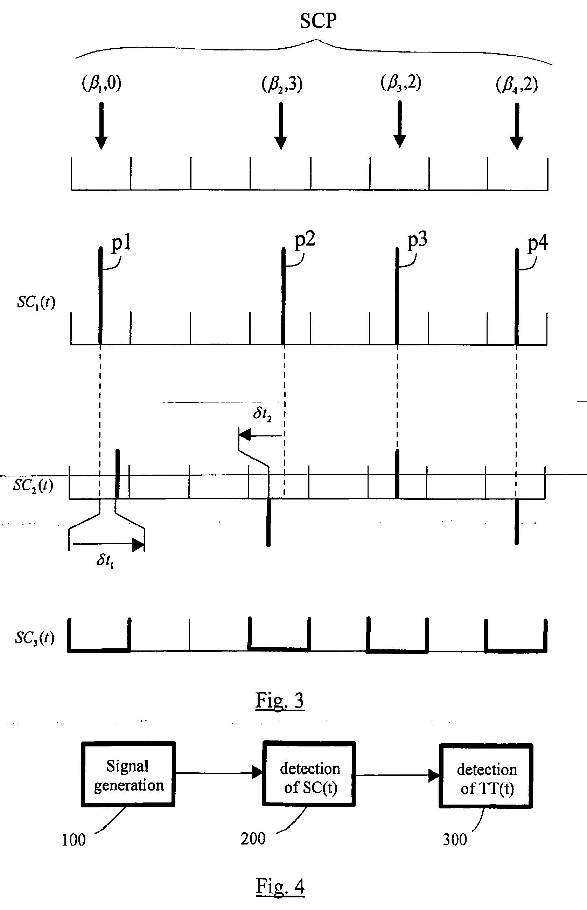

Fig. 3 diagrammatically shows an example of a signal characterisation pattern SCP and three examples of sequences of impulses $SC_1(t)$, $SC_2(t)$ and $SC_3(t)$ representative of the signal characterisation pattern SCP. In this example, the signal characterisation pattern SCP is a set of four pairs of values ($\beta_1$,0), ($\beta_2$,3), ($\beta_3$,2) and ($\beta_4$,2). In this example, each impulse is located in the middle of the time chip. Other locations of an impulse in a time chip may be considered of course.

The sequence of impulse $SC_1(t)$ is identical to the signal characterisation pattern SCP. So, a first impulse $P_1$ is inserted in a time chip of this sequence, a second impulse $P_2$ is inserted in the time chip located three time chips later, a third impulse $P_3$ is inserted in the time chip located two time chips later and a fourth impulse $P_4$ is inserted in the time chip located two time chips later.

The sequence of impulses $SC_2(t)$ is slightly different from the signal characterisation pattern SCP. Three types of variations occurred on impulses of this sequence compared to the impulses of the sequence of impulses $SC_1(t)$.

The first one is a modification of the position of impulses $P_1$ and $P_2$ which are time-shifted by respectively a positive and real value $\delta t_1$ and a negative and real value $\delta t_2$ which both belong to a time interval $\left[ -\dfrac{\varepsilon}{2}; \dfrac{\varepsilon}{2} \right]$ where the $\varepsilon$ value is defined in order to ensure that the impulse remains in the same time chip and where possibly random values $\delta t_1$ and $\delta t_2$ follow a probability law. The minimal features of the signal characterisation pattern SCP is then the set of pairs of amplitude/position values which may be possibly completed by the probability law. Thus, according to this example, two classes of receivers may be defined. One is related to the minimal feature of the pattern and the other one is related to the minimal features completed by the probability law related to random values $\delta t_1$ and $\delta t_2$.

The second variation is the multiplication by either the value +1 or the value-1 of each impulse of the sequence of impulses $SC_1(t)$. The determination of the multiplicative value is done following another probability law which is here defined in order that the probability of multiplying an impulse by the value +1 is equal to the probability of multiplying an impulse by the value -1. The minimal features of the signal characterisation pattern SCP is then the set of pairs of amplitude/position values and the fact that impulses have all the same polarities, features which may be possibly completed by possibly the probability law related to polarities. Thus, according to this example, two classes of receivers may be defined. One is related to the minimal feature of the pattern and the other one is related to the minimal features completed by the probability law related to polarities.

The third variation is an attenuation of amplitudes of impulses which are multiply by an attenuation value B (here B=0.5). The minimal features of the signal characterisation pattern SCP is then the set of pairs of amplitude/position values and a fixed attenuation value B, features which may be possibly completed by a probability law from which such a value may be estimated. Thus, according to this example, two classes of receivers may be defined. One is related to the minimal feature of the pattern and the other one is related to the minimal features completed by the probability law from which the attenuation value B may be estimated.

The sequence of impulse $SC_3(t)$ is also representative of the signal characterisation pattern SCP but the minimal features of the signal characterisation pattern are limited to the set of positions of impulses $P_1$, $P_2$, $P_3$ and $P_4$, features which may be possibly complete by a probability law from which the amplitude of each impulse maybe estimated. Thus, according to this example, two classes of receivers may be defined. One is related to the minimal feature of the pattern and the other one is related to the minimal features completed by the probability law from which the amplitudes may be estimated.

Fig. 4 shows a diagram which represents the steps of the transmission method according to the present invention.

The method for transmitting the signal Tsg(t) from the transmitter TRD to the receiver RCD includes a signal generation step 100. In the course of the signal generation step 100, a sequence of impulses SC(t) representative of the signal characterisation pattern SCP is periodically inserted in the signal Tsg(t) according to the structure of a signal frame used for forming the signal Tsg(t). In the course of the signal generation step 100, a sequence of impulses TT(t) representative of the time reference pattern TTP is also included in each signal frame. The signal generation step 100 is followed by a signal characterisation detection step 200 intended to detect from an observed part of the received signal Tsg(t) the presence of one of sequences of the impulses SC(t) representative of the signal characterisation pattern SCP embedded in a received signal frame F. When a sequence of impulses SC(t) representative of the signal characterisation pattern SCP has been detected, the signal characterisation detection step 200 is followed by a time reference detection step 300 intended to detect the presence of the sequence of impulses TT(t) representative of the time reference pattern TTP carried by the signal frame F.

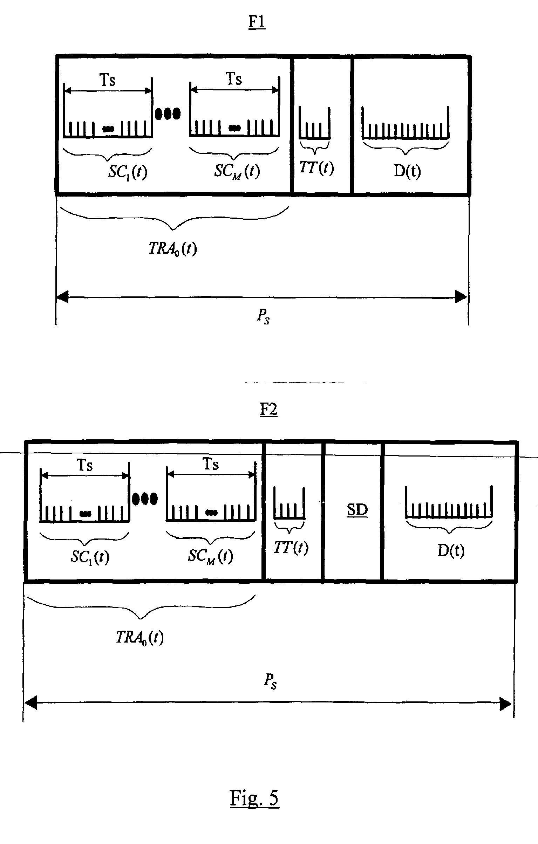

Fig. 5 diagrammatically shows two examples of a frame F used to form the signal Tsg(t). The signal Tsg(t) follows the temporal law given by the following equation which defines the signal frame F:

$$TRA_0(t) + TT(t) + D(t)$$

where $TRA_0(t)$ is a trailer which includes at least one sequence of impulses SC(t) representative of the signal characterisation pattern SCP. The index '0' in the expression $TRA_0(t)$ means that the number of sequences of impulses SC(t) may change during the transmission of the signal Tsg(t). The trailer $TRA_0(t)$ is followed by a single sequence of impulses TT(t) representative of the time reference pattern TTP, sequence of impulses which is followed by sequences of impulses D(t) which carry data to transmit. Note that a single sequence of impulses D(t) is depicted in Fig. 5 but several sequences of impulses D(t) which carries each data to transmit may be included in the signal frame F.

When a single sequence of impulses SC(t) is included in the trailer $TRA_0(t)$, the total duration $P_s$ of the frame F is then defined by the sum of the duration of the sequence of impulses SC(t) representative of the signal characterisation pattern SCP, the duration of the sequence of impulses TT(t) and the duration of sequences of impulses D(t). The period at which a sequence of impulses SC(t) is inserted in the signal Tsg(t) is then equal to the total duration $P_s$ of the frame F.

Preferably, several sequences of impulses SC(t) are included in the trailer $TRA_0(t)$. The total duration $P_s$ of the frame F is then defined by the sum of the duration of the M sequences of impulses SC(t) representative of the signal characterisation pattern SCP, the duration of the sequence of impulses TT(t) and the duration of sequences of impulses D(t). The period, from said M sequences of impulses, at which a sequence of impulses SC(t) is inserted in the signal Tsg(t) is then equal to the duration $T_s$ of a sequence of impulses SC(t).

A first example of a signal frame, referring to $F_1$ is depicted in Fig. 5. The signal frame $F_1$ includes M sequences of impulses $SC_1(t),...,SC_M(t)$, followed by a single sequence of impulses TT(t), followed by a sequence of impulses D(t).

Note that, in order to the receiver RCD to have enough time duration for switching from the detection of a sequence of impulses SC(t) representative of the signal characterisation pattern SCP to the detection of a sequence of impulses TT(t) representative of the time reference pattern TTP, the amplitude of some first pairs of amplitude/position values of the time reference pattern TTP may be chosen equal to zero, for example, in order to reserve some time chips for this switching duration.

The temporal law which defines the frame F does not constrain the sequences of impulses D(t) to be inserted just after the sequence of impulses TT(t). Thus, a silent duration SD may be observed between the last impulse of the sequence of impulses TT(t) and the first impulse of the sequence of impulses D(t). During the silent duration SD some signalling or controlling information may be transmitted. The total duration Ps of the signal frame, referring to the signal frame $F_2$ in Fig. 5, is then defined by the sum of the duration of M sequences of impulses SC(t), the duration of the sequence of impulses TT(t), the silent duration SD and the duration of the sequence of impulses D(t).

The transmission of the sequence of impulses D(t) being not directly related to the object of the present invention, they will not be considcred in the following for clarity.

According to an embodiment of the signal characterisation detection step 200, the presence of a sequence of impulses SC(t) representative of the signal characterisation pattern SCP is detected by comparing, with a predefined threshold value THv, an evaluation, from an observed part of the received signal, of a signal function SF defined according to the signal characterisation pattern features the receiver RCD knows.

The threshold value Thv is defined in order that when the evaluation of the signal function SF is lower than the threshold value Thv, a sequence of impulses SC(t) representative of the signal characterisation pattern SCP is not present in the observed part of the signal with a given misdetection probability and the signal characterisation detection step 200 is iterated by considering another observed part of the signal. The iteration of the signal characterisation detection step 200 stops when the signal function evaluation is greater than or equal to the threshold value THv, i.e. a sequence of impulses SC(t) is detected in an observed part of the signal.

According to an example, when the sequence of impulses SC(t) is identical to the signal characterisation pattern SCP, i.e. the features of the pattern SCP know by the receiver RCD is limited to the set of pairs of amplitude/position values $(\beta_j, m_j)$ $j \in [1,...,N_s]$, the signal function SF is a correlation function between impulses embedded in the observed part of the signal and a sequence of impulses which is identical to the signal characterisation pattern SCP, sequence of impulses which is generated by the receiver RCD from the features of the pattern SCP. A sequence of impulses SC(t) is then detected when such a correlation provides a high score, i.e. the sequence of impulses identical to the signal characterisation pattern SCP matches precisely in time impulses embedded in the observed part of the signal.

According to another example, when the pattern features known by the receiver RCD are completed by some probability law, the signal function SF is a function based on the energy of the observed part of the signal.

When the signal characterisation detection step 200 is iterated, the location of the observed part of the signal of an iteration **(i+1)** is defined from the location of the observed part at the iteration **(i)** by adding a time period T to the time instant $\theta_i$ at which the observed part was located at the iteration **(i).** Note that the time instant $\theta_1$ at the first iteration is determined arbitrarily, and the ratio between the time period T over the time chip duration $T_c$ is an integer value.

For example, the time period T is equal to the time chips duration $T_c$ modulo the duration $T_s$ of the sequence of impulses SC(t).

The signal characterisation detection step 200 is iterated till a predefined condition PC is satisfied. For example, in order to avoid to iterate such a detection step when the received signal Tsg(t) does not include a sequence of impulses SC(t) representative of the signal characterisation pattern SCP, this condition is satisfied when the cumulative duration of signal characterisation detection steps does not exceed a predefined time value.

This condition may also be satisfied when an external event, coming from a protocol implemented, for example, at the application level, occurs.

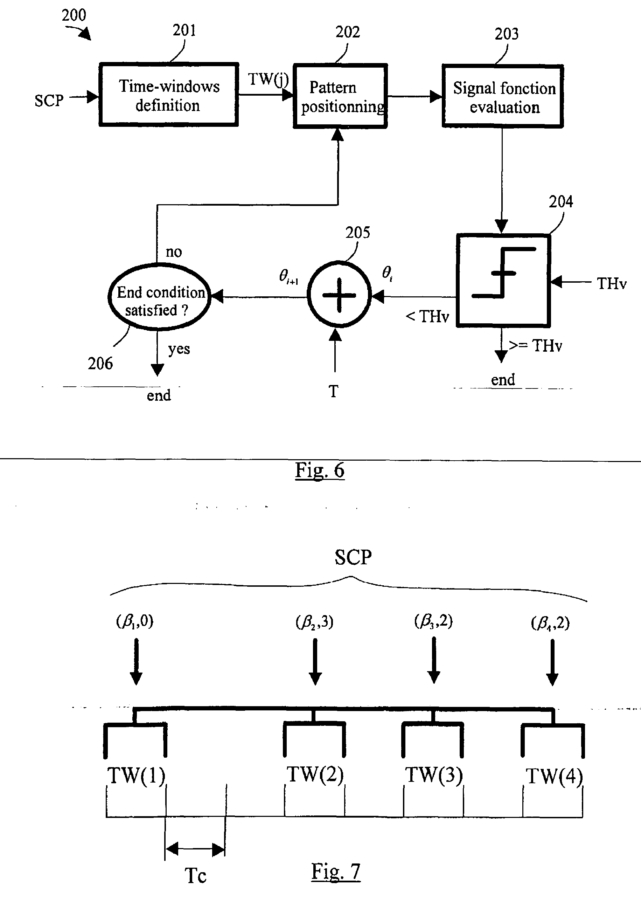

According to an embodiment of the signal characterisation detection step 200, depicted in Fig. 6, the signal characterisation detection step 200 includes a time-windows definition sub-step 201 in the course of which a set of time windows $TW(j)$, $j = 1,...,N_s$, which determines a time interval over which the signal is observed, is defined from the features of the signal characterisation pattern SCP.

Fig. 7 shows an example of a set of time windows $TW(j)$ defined according to the above-described example of the signal characterisation pattern SCP. Each time window $TW(j)$ has a duration at least equal to the time chip duration $T_c$ and is defined over a time chip separated of an other time window $TW(j+1)$ by the position value of the pair of amplitude/position $(\beta_{j+1}, m_{j+1})$ of the signal characterisation pattern SCP.

Referring now to Fig. 6, the sub-step 201 is then followed by a pattern-positioning sub-step 202 in the course of which the beginning of the set of time windows $TW(j)$, $j = 1,..., N_s$ is positioned at a current time instant $\theta_i$. When the first time window $TW(j=1)$ is positioned at a time instant $\theta_i$, i.e. the time window $TW(j=1)$ covers a time chip including the time instant $\theta_i$, all the other time windows of the set of windows are also positioned by definition. Thus, the location of the observed part of the signal $Tsg(t)$ is defined according to the time instant $\theta_i$. The sub-step 202 is then followed by an evaluation sub-step 203 in the course of which the signal function SF is evaluated. The sub-step 203 is then followed by a comparison sub-step 204 in the course of which the evaluation of the signal function is compared to the predefined threshold value THv. When the evaluation of the signal function SF is lower than the predefined threshold value THv, the sub-step 204 is followed by a time instant update sub-step 205 in the course of which a time instant $\theta_{i+1}$ is obtained by adding the time period T to the time instant $\theta_i$. The sub-step 205 is then followed, if the condition PC, checked in the course of a sub-step 206, is not satisfied, by the sub-step 202 previously described in which the time instant $\theta_i$ is now equal to the time instant $\theta_{i+1}$.

In order to ensure that a sequence of impulses SC(t) be detected (if present in a received signal Tsg(t)) after a finite number of iterations, each time chip of the trailer which potentially embeds an impulse of a sequence SC(t), shall be considered for positioning the first time window TW(1) without considering twice the same time chip.

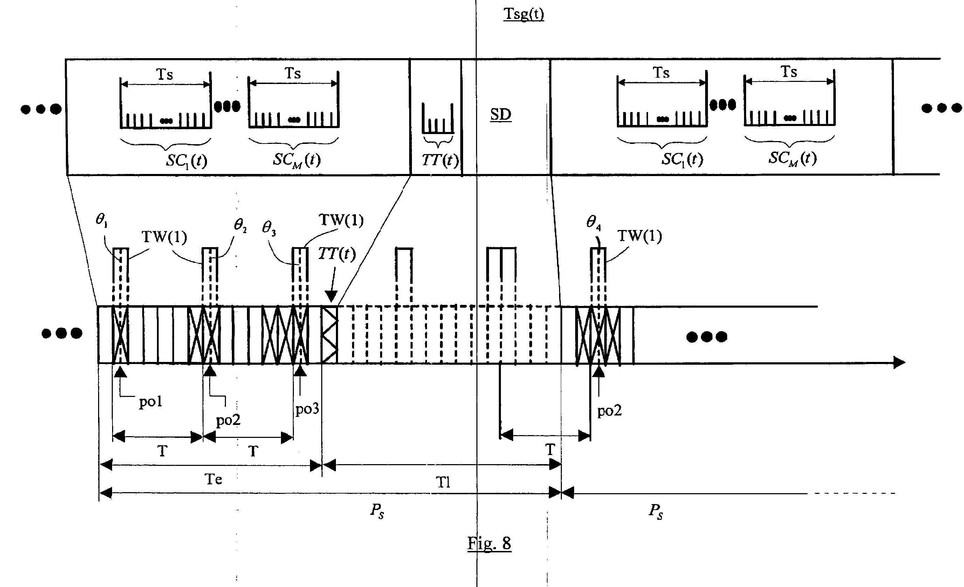

Fig. 8 shows chronograms which depict an example of successive iterations of the signal characterisation detection step 200 when a signal Tsg(t) is present at the receiver end.

In the example depicted in Fig. 8, the sequences of impulses SC(t) are representative of the signal characterisation pattern SCP as depicted in Fig. 3 ($N_S$=4), and the signal frame F includes multiple sequences of impulses SC(t) in the trailer $TRA_0(t)$ and includes a silent duration SD. The sequences of impulses D(t) are not depicted as above-mentioned. The set of windows includes then four ($N_s$) time windows TW(j). Only the first time window TW(1) and time chips in which the first impulse of a sequence of impulses, here 5, is possibly embedded are depicted in Fig. 8 for clarity. The time period T equals $6.T_c$ in this example and the sequence of impulses TT(t) is composed of a single impulse.

At the first iteration of the signal characterisation detection step 200, the first time window TW(1) is positioned at an arbitrary time instant $\theta_1$, which is, in the example depicted in Fig. 8, located at the middle of a time chip po1. The signal function SF over the time windows TW(j) (j=1 to Ns) is then evaluated. In the example depicted in Fig. 8, it is assumed that none or some of time windows does not contain an impulse of a sequence of impulses SC(t). The signal function evaluation is then lower than the threshold value THv and the signal characterisation detection step 200 is iterated.

Note that in Fig. 8, when a time chip has been considered during an iteration of the signal characterisation detection step 200, a cross is set over the rectangle representing said time chip.

During a second iteration of the signal characterisation detection step 200, the first time window TW(1) is positioned at a time instant $\theta_2$ obtained by adding the time period T to the time instant $\theta_1$. In the example depicted here, the time instant $\theta_2$ is located at the middle of the time chip po2.

In this example, when the first time window TW(1) is positioned over the time chip po2, the signal function SF is evaluated and compared to the threshold value Thv. It is assumed, here that the signal function evaluation is lower than the threshold value THv, the signal characterisation detection step 200 is then iterated.

During a third iteration of the signal characterisation detection step 200, the first window TW(1) is positioned at a time instant $\theta_3$ which is, in the example depicted here, located at the middle of a time chip po3. The time instant $\theta_3$ is obtained by adding the time period T to the time instant $\theta_2$. In this example, it is assumed that the signal function evaluation is still lower than the threshold value Thv.

Thus, following this example, three different time chips $po_1$, $po_2$ and $po_3$ which potentially embed the first impulse of a sequence SC(t) have been considered. During the silent duration SD, the receiver RCD is still performing iterations of the signal characterisation detection step 200 each time period T assuming the condition PC is not satisfied. In this example, assuming the duration T1 of the silent duration SD equals to the total duration Te of the trailer $TRA_0(t)$, three new signal characterisation detection steps are executed. After the silent duration SD, the first window TW(1) is positioned at a time instant $\theta_4$ which is, in the example depicted here, located at the middle of the time chip $po_2$ of a new frame. The time chip $po_2$ has been previously considered during the second iteration of the signal characterisation detection step 200 but the time chip $po_0$ (for example) has not been considered yet Consequently, when the first impulse of a sequence of impulses SC(t) is embedded in the time chip $po_0$, said sequence of impulse SC(t) can not be detected.

Mathematically speaking, this problem can be expressed by the following equation:

$$\forall \quad \theta \in [0, Ps[, \quad \exists \ m, n \in N \quad and \quad q \in [0, Q-1] \ with \ Q = \frac{Te}{Ts} \quad such \ that$$

$$\left| \theta + mT - nPs - qTs \right| < \frac{T_c}{x}$$

with $\theta$ is a time instant from which an observed part of the signal is defined, x means a mathematical variable, N means the set of natural numbers. Assuming that $\frac{P_S}{T_c}$ and $\frac{T_S}{T_c}$ are all integer values, it could be demonstrated that this equation is verified if the value of the ratio $\frac{P_S(k)}{T_c}$ and the value of the ratio $\frac{T}{T_c}$ are prime numbers between them.

In the example depicted in Fig. 8, because $\frac{P_S(k)}{T_c} = 30$ and $\frac{T}{T_c} = 6$, this constraint is violated.

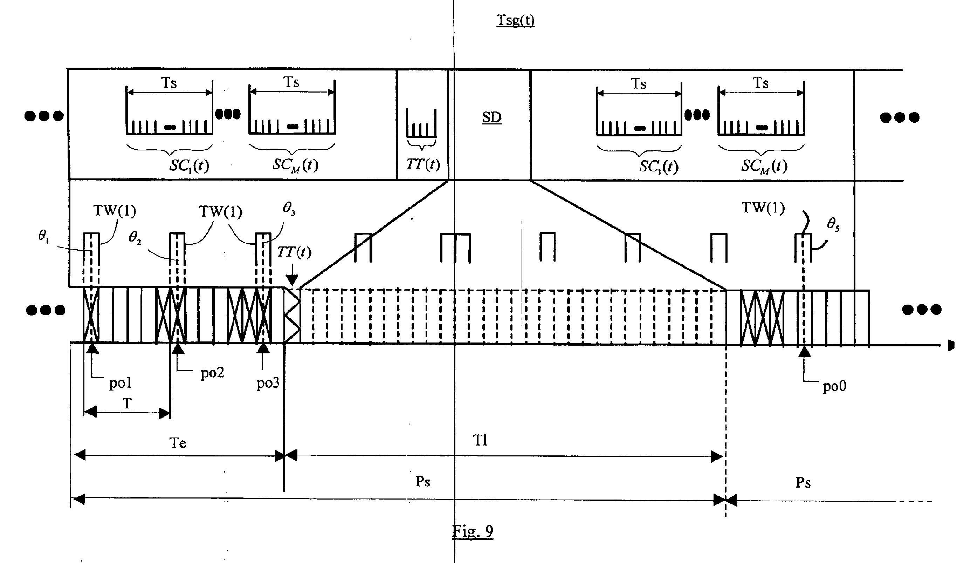

Fig. 9 shows chronograms which depict an example of successive iterations of the signal characterisation detection step 200 from which a sequence of impulses SC(t) representative of the signal characterisation pattern SCP is detected after a finite number of iterations when a signal Tsg(t) is present at the receiver end. The assumptions on the signal frame and the signal characterisation pattern SCP used for the description of Fig. 8 are here also used.

Following the three first iterations of the signal characterisation detection step 200 depicted in Fig. 8, three time chips $po_1$, $po_2$ and $po_3$ have been considered. During the silent duration SD, the receiver RCD is still performing the signal characterisation detection steps each time period T. That is depicted by dashed lines in Fig. 9.

In the example depicted in Fig. 9, because the ratio $\frac{P_S(k)}{T_c}$ is equal to 45 and the ratio $\frac{T}{T_c}$ is equal to 6 the above-mentioned constraint is satisfied because these two ratio are prime numbers between them.

Thus, during the iteration of the signal characterisation detection step 200 executed just after the silent duration SD, the first window TW(1) is set at a time instant $\theta_5$ which is, in the example depicted here, located at the middle of the duration of a time chip $po_0$. It is assumed, here the signal function evaluation is greater than or equal the threshold value THv and a sequence of impulses SC(t) representative of the signal characterisation pattern SCP is considered as being detected.

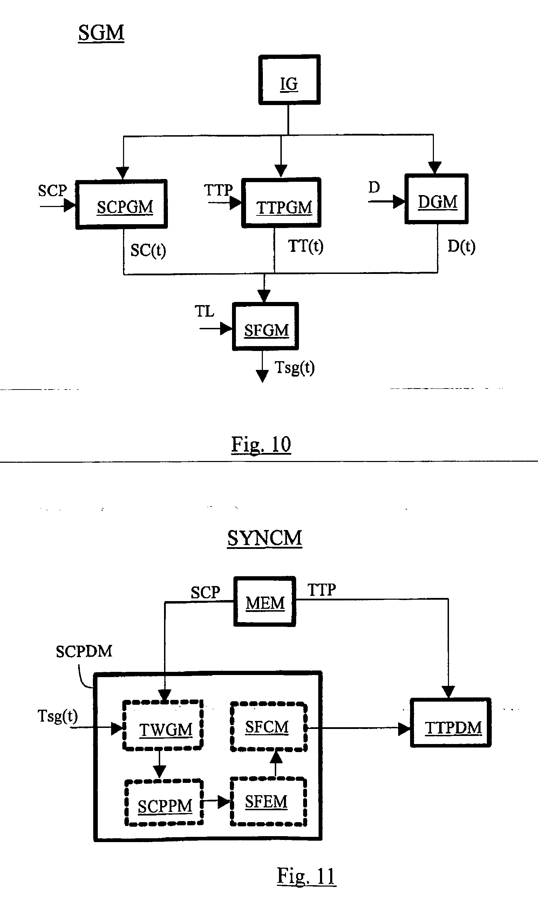

Fig. 10 is a block diagram which represents the signal generation means SGM according to the present invention.

The signal generation means SGM include an impulse generator IG intended to generate impulses having short durations. The shape of impulses is, for example similar to the shape depicted in Fig. 2. The signal generation means SGM include also means SCPGM for forming a sequence of impulses SC(t) representative of the signal characterisation pattern SCP from generated impulses and means TTPGM for forming a sequence of impulses TT(t) representative of the time reference pattern TTP from generated impulses. Moreover, the signal generation means SGM include means DGM for forming a sequence of impulses D(t) which carry data D to transmit. The signal generation means SGM further include means SFGM for forming a frame F of the signal Tsg(t) according to a temporal law TL by inserting in that signal frame at least one sequence of impulses SC(t), a single sequence of impulses TT(t) and sequences of impulses D(t).

Fig. 11 is a block diagram which represents the means SYNCM intended to synchronise in time the receiver RCD with the transmitter TRD according to the present invention. The means SYNCM include means MEM for storing the features of a signal characterisation pattern SCP and the features of a time reference pattern TTP, means SCPDM for detecting from an observed part of the received signal a sequence of impulses SC(t) representative of the signal characterisation pattern SCP and means TTPDM for detecting a sequence of impulses TT(t) representative of the time reference pattern TTP.

According to an embodiment of the receiver RCD, the means SCPDM include means TWGM for defining a set of time windows TW(j) from the features of the signal characterisation pattern SCP stored in means MEM, means SCPPM for positioning the first time window TW(1) of the set of time windows over a time chip defined by a time instant, means SFEM for evaluation a signal function SF over the set of time windows, and means SFCM for comparing a signal function evaluation to a predefined threshold value THv.

According to an embodiment of the receiver RCD, the means SCPDM for detecting from an observed part of the received signal the presence of one of sequences of impulses representative of the signal characterisation pattern SCP embedded in a received signal frame F being used each time period T, the total duration $P_s$ of the signal frame F and the time period T are chosen in order that the value of the ratio between the total duration $P_s$ of the signal frame over the duration $T_c$ of said time chip and the value of the ratio between said time period T over the duration $T_c$ of said time chip are two numbers which are prime numbers between them.

According to an embodiment of the receiver RCD, the means SCPDM for detecting from an observed part of the received signal the presence of one of sequences of impulses representative of the signal characterisation pattern SCP embedded in a received signal frame F are used each time period T till the predefined condition PC is satisfied.

According to an embodiment of the receiver RCD, the predefined condition PC is satisfied when a sequence of impulses characteristic of the signal characterisation pattern is detected.

According to an embodiment of the receiver RCD, the predefined condition PC is satisfied when the cumulative duration for detecting that an observed part of the received signal the presence of one of sequences of impulses representative of the signal characterisation pattern SCP does not exceed a predefined time value.

According to an embodiment of the receiver RCD, the predefined condition PC is satisfied when an external event coming from a protocol implemented, for example, at the application level, occurs.

**Claims**

1. Method for transmitting a signal carrying data from a transmitter (TRD) to a receiver (RCD) in an impulse-based telecommunication system (SYST), the carrying data being obtained by the receiver when the received signal has been synchronised in time, said synchronisation in time of the received signal being reached when a sequence of impulses generated from a time reference pattern (TTP) known by the receiver beforehand, is detected from a received frame of the transmitted signal, **characterised in that** it includes

   - a signal generation step (100) intended to be executed by the transmitter in the course of which
   - a sequence of impulses representative of a signal characterisation pattern (SCP) known by the receiver beforehand is periodically inserted in the signal to transmit, said sequence of impulses indicating that each frame of the signal to transmit carries a sequence of impulses representative of the time reference pattern (TTP),
   - a single sequence of impulses representative of said time reference pattern (TTP) is inserted in each frame of the signal to transmit,
   - a signal characterisation detection step (200) intended to detect from an observed part of the received signal the presence of one of sequences of impulses representative of the signal characterisation pattern (SCP) embedded in a received signal frame, and,
   - when a sequence of impulses representative of the signal characterisation pattern (SCP) has been detected, a time reference detection step (300) intended to detect the presence of the sequence of impulses representative of the time reference pattern (TTP) carried by said signal frame.

2. Method for transmitting a signal carrying data from a transmitter (TRD) to a receiver (RCD) in an impulse-based telecommunication system (SYST) as claimed in claim 1, the features of the signal characterisation pattern being a set of pairs of amplitude/position values possibly completed by at least one probability law related to said set of pairs of amplitude/position of values, **characterised in that** the presence of a sequence of impulses representative of the signal characterisation pattern (SCP) is detected by comparing with a predefined threshold value, an evaluation, from the observed part of the received signal, of a signal function (SF) defined according to the features of the signal characterisation pattern the receiver (RCD) knows.

3. Method for transmitting a signal carrying data from a transmitter (TRD) to a receiver (RCD) in an impulse-based telecommunication system (SYST) as claimed in one of claims 1 to 2, a single impulse of the signal being embedded in a time chip, the signal characterisation detection step being executed each time period T, **characterised in that** the total duration $(P_s)$ of the frame and the time period T are chosen in order that the value of the ratio between the total duration $(P_s)$ of the signal frame over the duration $(T_c)$ of said time chip and the value of the ratio between said time period T over the duration $(T_c)$ of said time chip are two numbers which are prime numbers between them.

4. Method for transmitting a signal carrying data from a transmitter (TRD) to a receiver (RCD) in an impulse-based telecommunication system (SYST) as claimed in claim 3, **characterised in that** the signal characterisation detection step is executed till a predefined condition (PC) is satisfied.

5. Method for transmitting a signal carrying data from a transmitter (TRD) to a receiver (RCD) in an impulse-based telecommunication system (SYST) as claimed in claim 4, **characterised in that** the predefined condition (PC) is satisfied when a sequence of impulses characteristic of the signal characterisation pattern is detected.

6. Method for transmitting a signal carrying data from a transmitter (TRD) to a receiver (RCD) in an impulse-based telecommunication system (SYST) as claimed in claim 4, **characterised in that** the predefined condition (PC) is satisfied when the cumulative duration of signal characterisation detection steps executed periodically does not exceed a predefined time value.

7. Method for transmitting a signal carrying data from a transmitter (TRD) to a receiver (RCD) in an impulse-based telecommunication system (SYST) as claimed in claim 4, **characterised in that** the predefined condition (PC) is satisfied when an external event, coming from a protocol, occurs.

8. Method for transmitting a signal carrying data from a transmitter (TRD) to a receiver (RCD) in an impulse-based telecommunication system (SYST) as claimed in one of claims 2 to 7, **characterised in that** the signal characterisation detection step (200) includes

   a) an time-windows definition sub-step (201) in the course of which a set of time windows, which determines a time interval over which the signal is observed, is defined from the features of the signal characterisation pattern (SCP),
   b) a pattern-positioning sub-step (202) in the course of which the beginning of the set of time windows is located at a current time instant ($\theta_i$),
   c) an evaluation sub-step (203) in the course of which the signal function is evaluated,
   d) a comparison sub-step (204) in the course of which said signal function evaluation is compared to the predefined threshold value, and
   e) when the signal function evaluation is lower than the predefined threshold value, a time instant update sub-step (205) in the course of which a new current time instant ($\theta_{i+1}$) is obtained by adding the time period T to the current time instant ($\theta_i$), the step b) is then repeated by considering said new current time instant ($\theta_{i+1}$).

9. Impulse-based telecommunication system intended to transmit a signal carrying data from a transmitter (TRD) to a receiver (RCD), the carrying data being obtained by the receiver when the received signal has been synchronised in time, said synchronisation in time of the received signal being reached when a sequence of impulses generated from a time reference pattern (TTP) known by the receiver beforehand, is detected from a received frame of the transmitted signal, **characterised in that** it includes

   - means (IG) for generating an impulse,
   - means (SCPGM) for forming a sequence of impulses representative of a signal characterisation pattern (SCP) from generated impulses,
   - means (TTPGM) for forming a sequence of impulses representative of said time reference pattern (TTP) from generated impulses,
   - means (DGM) for forming a sequence of impulses which carry data to transmit,
   - means (SFGM) for forming a frame (F) of the signal Tsg(t) according to a temporal law (TL) by inserting **in that** signal frame at least one sequence of impulses representative of the signal characterisation pattern (SCP), a single sequence of impulses representative of the time reference pattern (TTP) and sequences of impulses which carry data to transmit,
   - means (MEM) for storing a signal characterisation pattern (SCP) and a time reference pattern (TTP),
   - means (SCPDM) for detecting from an observed part of the received signal the presence of one of sequences of impulses representative of the signal characterisation pattern (SCP) embedded in a received signal frame, and,
   - means (TTPDM) for detecting a sequence of impulses representative of the time reference pattern (TTP) carried by said signal frame.

10. Impulse-based telecommunication system as claimed in claim 9, the features of the signal characterisation pattern being a set of pairs of amplitude/position values possibly completed by at least one probability law related to said set of pairs of amplitude/position of values, **characterised in that** the means (SCPDM) for detecting from an observed part of the received signal the presence of one of sequences of impulses representative of the signal characterisation pattern (SCP) include

- means (TWGM) for defining a set of time windows TW(j) from the features of the signal characterisation pattern SCP,
- means (SCPPM) for positioning the first time window TW(1) of the set of time windows over a time chip defined by a time instant,
- means (SFEM) for evaluation a signal function (SF) over the set of time windows, said signal function (SF) being defined according to the features of the signal characterisation pattern (SCP), and
- means (SFCM) for comparing a signal function evaluation to a predefined threshold value (THv).

**11.** Impulse-based telecommunication system as claimed in one of claims 9 to 10, a single impulse of the signal being included in a time chip, the means (SCPDM) for detecting from an observed part of the received signal the presence of one of sequences of impulses representative of the signal characterisation pattern (SCP) embedded in a received signal frame (F) being used each time period T, **characterised in that** the total duration ($P_s$) of the signal frame (F) and the time period T are chosen in order that the value of the ratio between the total duration ($P_s$) of the signal frame over the duration ($T_c$) of said time chip and the value of the ratio between said time period T over the duration ($T_c$) of said time chip are two numbers which are prime numbers between them.

**12.** Impulse-based telecommunication system as claimed in claim 11, **characterised in that** the means (SCPDM) for detecting from an observed part of the received signal the presence of one of sequences of impulses representative of the signal characterisation pattern (SCP) embedded in a received signal frame (F) are used each time period T till a predefined condition (PC) is satisfied.

**13.** Impulse-based telecommunication system as claimed in claim 12, **characterised in that** the predefined condition (PC) is satisfied when a sequence of impulses characteristic of the signal characterisation pattern is detected.

**14.** Impulse-based telecommunication system as claimed in claim 12, **characterised in that** the predefined condition is satisfied when the cumulative duration of for detecting from an observed part of the received signal the presence of one of sequences of impulses representative of the signal characterisation pattern (SCP) does not exceed a predefined time value.

**15.** Impulse-based telecommunication system as claimed in claim 12, **characterised in that** the predefined condition is satisfied when an external event coming from a protocol occurs.

**16.** Transmitter of an impulse-based telecommunication system intended to transmit a signal carrying data to a receiver (RCD), the carrying data being obtained by the receiver (RCD) when the received signal has been synchronised in time, said synchronisation in time of the received signal being reached when a sequence of impulses generated from a time reference pattern (TTP) known by the receiver beforehand, is detected from a received frame of the transmitted signal, **characterised in that** it includes

- means (IG) for generating an impulse,
- means (SCPGM) for forming a sequence of impulses representative of a signal characterisation pattern (SCP) from generated impulses,
- means (TTPGM) for forming a sequence of impulses representative of said time reference pattern (TTP) from generated impulses,
- means (DGM) for forming a sequence of impulses which carry data to transmit, and
- means (SFGM) for forming a frame (F) of the signal Tsg(t) according to a temporal law (TL) by inserting **in that** signal frame at least one sequence of impulses representative of the signal characterisation pattern (SCP), a single sequence of impulses representative of the time reference pattern (TTP) and sequences of impulses which carry data to transmit.

**17.** Receiver of an impulse-based telecommunication system intended to receive a signal carrying data transmitted by a transmitter (TRD), the carrying data being obtained by said receiver when the received signal has been synchronised in time, said synchronisation in time of the received signal being reached when a sequence of impulses generated from a time reference pattern (TTP) known by said receiver beforehand, is detected from a received frame of the transmitted signal, **characterised in that** it includes

- means (MEM) for storing a signal characterisation pattern (SCP) and a time reference pattern (TTP),

- means (SCPDM) for detecting from an observed part of the received signal the presence of one of sequences of impulses representative of the signal characterisation pattern (SCP) embedded in a received signal frame, and,
- means (TTPDM) for detecting a sequence of impulses representative of the time reference pattern (TTP) carried by said signal frame.

**18.** Receiver of an impulse-based telecommunication system intended to receive a signal carrying data transmitted by a transmitter as claimed in claim 17, the features of the signal characterisation pattern, known by said receiver beforehand, being a set of pairs of amplitude/position values possibly completed by at least one probability law related to said set of pairs of amplitude/position of values, **characterised in that** the means (SCPDM) for detecting from an observed part of the received signal the presence of one of sequences of impulses representative of the signal characterisation pattern (SCP) include

- means (TWGM) for creating a set of time windows TW(j) from the features of the signal characterisation pattern SCP,
- means (SCPPM) for positioning the first time window TW(1) of the set of time windows over a time chip defined by a time instant,
- means (SFEM) for evaluation a signal function (SF) over the set of time windows, said signal function (SF) being defined according to the features of the signal characterisation pattern (SCP), and
- means (SFCM) for comparing a signal function evaluation to a predefined threshold value (THv).

**19.** Receiver of an impulse-based telecommunication system intended to receive a signal carrying data transmitted by a transmitter (TRD) as claimed in one of claims 17 to 18, a single impulse of the signal being included in a time chip, the means (SCPDM) for detecting from an observed part of the received signal the presence of one of sequences of impulses representative of the signal characterisation pattern (SCP) embedded in a received signal frame (F) being used each time period T, **characterised in that** the total duration ($P_s$) of the signal frame (F) and the time period T are chosen in order that the value of the ratio between the total duration ($P_s$) of the signal frame over the duration ($T_c$) of said time chip and the value of the ratio between said time period T over the duration ($T_c$) of said time chip are two numbers which are prime numbers between them.

**20.** Receiver of an impulse-based telecommunication system intended to receive a signal carrying data transmitted by a transmitter (TRD) as claimed in claim 19, **characterised in that** the means (SCPDM) for detecting from an observed part of the received signal the presence of one of sequences of impulses representative of the signal characterisation pattern (SCP) embedded in a received signal frame (F) are used each time period T till a predefined condition (PC) is satisfied.

**21.** Receiver of an impulse-based telecommunication system intended to receive a signal carrying data transmitted by a transmitter (TRD) as claimed in claim 20, **characterised in that** the predefined condition (PC) is satisfied when a sequence of impulses characteristic of the signal characterisation pattern is detected.

**22.** Receiver of an impulse-based telecommunication system intended to receive a signal carrying data transmitted by a transmitter (TRD) as claimed in claim 20, **characterised in that** the predefined condition is satisfied when the cumulative duration for detecting that an observed part of the received signal the presence of one of sequences of impulses representative of the signal characterisation pattern (SCP) does not exceed a predefined time value.

**23.** Receiver of an impulse-based telecommunication system intended to receive a signal carrying data transmitted by a transmitter (TRD) as claimed in claim 20, **characterised in that** the predefined condition is satisfied when an external event coming from a protocol occurs.

**24.** Signal carrying data to transmit by a transmitter (TRD) of an impulse-based telecommunication system (SYST) and intended to be receive by a receiver (RCD), the carrying data being obtained by the receiver (RCD) when said signal has been synchronised in time, said synchronisation in time of said signal being reached when a sequence of impulses generated from a time-reference pattern (TTP) known by the receiver beforehand is detected from a received frame of said signal, **characterised in that** said signal frame includes

- at least one sequence of impulses representative of a signal characterisation pattern (SCP), said sequence of impulses indicating that each frame of said signal to transmit carries a sequence of impulses representative of the time reference pattern (TTP), and
- a single sequence of impulses representative of said time reference pattern.

25. Signal carrying data to transmit by a transmitter (TRD) of an impulse-based telecommunication system (SYST) and intended to be receive by a receiver (RCD) as claimed in claim 24, **characterised in that** the signal frame further includes a silent duration (SD) located between the last impulse of the sequence of impulses representative of the time reference pattern and the first impulses of the sequence of impulses which carry the data to transmit.

TANT

RANT

Tsg(t)

TRD

SGM

RCD

SYNCM

DM

<u>Fig. 1</u>

p(t)

$\beta$

Tw

Tc

<u>Fig. 2</u>

SCP

$(\beta_1,0)$       $(\beta_2,3)$       $(\beta_3,2)$       $(\beta_4,2)$

p1       p2       p3       p4

$SC_1(t)$

$\delta t_2$

$SC_2(t)$

$\delta t_1$

$SC_3(t)$

Fig. 3

| Signal generation | → | detection of SC(t) | → | detection of TT(t) |

100       200       300

Fig. 4

F1

$SC_1(t)$   $SC_M(t)$   $TT(t)$   $D(t)$

$Ts$   $Ts$

$TRA_0(t)$

$P_S$

F2

$SC_1(t)$   $SC_M(t)$   $TT(t)$   SD   $D(t)$

$Ts$   $Ts$

$TRA_0(t)$

$P_S$

Fig. 5

Fig. 6

Fig. 7

Fig. 8

EP 1 892 841 A1

Fig. 9

SGM

Fig. 10

SYNCM

Fig. 11

**European Patent Office**

## EUROPEAN SEARCH REPORT

Application Number

EP 06 01 7620

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/136439 A1 (DEWBERRY BRANDON [US] ET AL) 15 July 2004 (2004-07-15) <br> * abstract * <br> * paragraphs [0221], [0316], [0317], [0320], [0321], [0327], [0338], [0341], [0497]; figures 5b,12a,13-15,21,22 * <br> ----- | 1,9,16, 17,24 | INV. H04B1/69 <br><br> ADD. H04B1/707 |
| A | EP 1 553 708 A (TEXAS INSTRUMENTS INC [US]) 13 July 2005 (2005-07-13) <br> * abstract * <br> * paragraphs [0003], [0005], [0014]; figures 1,2 * <br> ----- | 1,9,16, 17,24 | |

TECHNICAL FIELDS SEARCHED (IPC)

H04B

The present search report has been drawn up for all claims

| Place of search | Date of completion of the search | Examiner |
|---|---|---|
| Munich | 7 February 2007 | Bossen, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 01 7620

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2007

| Patent document cited in search report | | Publication date | Patent family member(s) | Publication date |
|---|---|---|---|---|
| US 2004136439 | A1 | 15-07-2004 | NONE | |
| EP 1553708 | A | 13-07-2005 | NONE | |

EPO FORM P0459

For more details about this annex : see Official Journal of the European Patent Office, No. 12/82